# EUROPÄISCHE PATENTSCHRIFT

(11) **EP 2 461 535 B1**
(45) Veröffentlichungstag und Bekanntmachung des Hinweises auf die Patenterteilung: **15.02.2017**
(21) Anmeldenummer: 10193592.2
(22) Anmeldetag: 03.12.2010
(51) Int. Cl.: H04L 29/06, H04L 29/08

(54) **Erkennen eines Bedarfs zum Aufbau und Aufbauen eines Kommunikationskanals über eine Schnittstelle eines Computersystems mittels eines Kommunikationsprotokolls**
Detection of a need to establish and establishment of a communication channel over an interface of a computer system using a communication protocol
Reconnaissance d'un besoin pour le montage d'un canal de communication via une interface d'un programme informatique à l'aide d'un protocole de communication

(43) Veröffentlichungstag der Anmeldung: 06.06.2012
(73) Patentinhaber: Deutsche Telekom AG, 53113 Bonn (DE)
(72) Erfinder: Boness, Olaf, D-31535 Neustadt am Rübenberge (DE); Fleischhauer, Karsten, D-64297 Darmstadt (DE)
(74) Vertreter: Vossius & Partner Patentanwälte Rechtsanwälte mbB

(56) Entgegenhaltungen:
- EP-A1- 1 538 803
- EP-A1- 1 722 537
- EP-A1- 1 742 446
- US-A1- 2005 182 829
- US-A1- 2006 028 998

## Beschreibung

### Technisches Gebiet

Die Erfindung betrifft ein Verfahren zum Erkennen eines Bedarfs zum Aufbau eines Kommunikationskanals über eine Schnittstelle eines Computersystems mittels eines Kommunikationsprotokolls gemäß dem Oberbegriff des unabhängigen Anspruchs 1, wobei Kommunikationsaufgaben im Computersystem in mehrere Schichten unterteilt sind, die eine Netzwerkschicht aufweisen. Solche Verfahren umfassen ein Erkennen eines Kommunikationsbedarfs des Computersystems, ein temporären Beziehen einer Kommunikationsressource des Kommunikationsprotokolls bei erkanntem Kommunikationsbedarf des Computersystems, und ein Zuweisen der Kommunikationsressource an die Schnittstelle des Computersystems und können für eine Kommunikation des Computersystems über ein Computernetz eingesetzt werden.

### Stand der Technik

Heutzutage kann unter Verwendung eines Kommunikationsprotokolls eine Kommunikation von vernetzten Kommunikationssystemen über ein Netzwerk realisiert werden und insbesondere unter Verwendung eines Internetprotokolls (IP) eine Kommunikation von Computersystemen über das Internet. Solche Internetprotokolle sind gegenwärtig in einer Version 4 (IPv4) unter der Bezeichnung RFC 791 und in einer Version 6 (IPv6) unter der Bezeichnung RFC 2460 durch eine Gruppe (RFC-Editoren) der Internet Engineering Task Force (IETF) spezifiziert und veröffentlicht. Durch allgemeine Akzeptanz und Gebrauch haben sich das IPv4 und das IPv6 zu Standards entwickelt, auf denen das Internet aufbaut, wobei heutzutage vorrangig noch das IPv4 implementiert ist.

Zur Ansteuerung von Schnittstellen der Computersysteme sieht das IPv4 eindeutige Adressen von 32 Bit Länge und das IPv6 eindeutige Adressen von 128 Bit Länge vor. Bedingt durch das Wachstum des Internets reicht die Anzahl an global vorhandenen IPv4-Adressen zunehmend weniger aus. Es besteht somit die Gefahr, dass der globale Pool an IPv4-Adressen in absehbarer Zeit erschöpft sein wird und dass dann keine weiteren IPv4-Adressen im Internet mehr zur Verfügung stehen. Damit es nicht zu solchen Engpässen kommt, ist die Einführung des IPv6 erforderlich und auch im Gange. Während der Migrationsphase von IPv4 zu IPv6 werden im Internet beide Protokollversionen parallel verwendet. Zumindest für die Migrationsphase sind deshalb Anschlüsse, Zwischensysteme (Intermediate Systems), die zwischen zwei oder mehreren Endgeräten angeordnet sind, und Endsystemen vorgesehen, die beide Protokolle unterstützen und sowohl für IPv4-basierte Kommunikation als auch für IPv6-basierte Kommunikation zur Verfügung stehen (Dual-Stack). Bei Dual-Stack bilden aber das IPv4 und das IPv6 eigene grundsätzlich unabhängig voneinander agierende Kommunikationskanäle, wobei IPv6 nicht abwärts kompatibel zu IPv4 und ein Zusammenarbeiten zwischen IPv4 und IPv6 nur auf verhältnismäßig komplexe Weise umzusetzen ist.

Um auch bei zunehmender Knappheit an globalen IPv4-Adressen eine IPv4-basierte Kommunikation zu ermöglichen, ist ein Mehrfachverwenden (Multiplexen) von IPv4-Adressen sinnvoll und notwendig. Eine häufig implementierte Variante dieses Multiplexens ist das Zeitmultiplexen, das darauf beruht, dass eine IPv4-Adresse einem Computersystem temporär bei Bedarf zur Verfügung gestellt wird und später, wenn die entsprechende Kommunikation beendet ist, wieder freigegeben wird. Damit im Rahmen des Zeitmultiplexens von IP-Adressen und insbesondere von IPv4-Adressen einem Computersystem dynamisch automatisiert eine Adresse zugewiesen werden kann, ist ein Erkennen eines entsprechenden Kommunikationsbedarfs beziehungsweise eines Internetkommunikationsbedarfs des Computersystems notwendig.

Die Ermittlung dieses Internetkommunikationsbedarfs auf einer Schnittstelle beziehungsweise auf einem Kommunikationskanal ist bei einem Endsystem prinzipiell anhand des entsprechenden Funktionsaufrufs erkennbar. Bei einem Intermediate System ist der Internetkommunikationsbedarf auf einer Schnittstelle beziehungsweise auf einem Kommunikationskanal beim Eintreffen beziehungsweise der Verarbeitung eines Datenpaketes auf einer anderen oder der gleichen Schnittstelle erkennbar. Ist der Kommunikationsbedarf des Computersystems erkannt, können Mechanismen zur Vergabe der IP-Adresse beziehungsweise der IPv4-Adresse angestoßen werden. Danach kann der Kommunikationsbedarf umgesetzt bzw. befriedigt werden, indem über den mittels der vergebenen und der Schnittstelle zugewiesenen IP-Adresse induzierten Kommunikationskanal kommuniziert wird. Dieses Erkennen des Kommunikationsbedarfs und explizite Anstoßen der Vergabe der IP-Adresse kann jedoch zu zeitlichen Verzögerungen bei der Initiierung der Kommunikation führen. Insbesondere kann es zu einer zeitlichen Verzögerung beim Absenden und Versenden eines IP-Datenpakets von beziehungsweise zu einem Endsystem oder bei der Weiterleitung des IP-Datenpakets auf einem Intermediate System führen, da erst nach dem Erkennen des Kommunikationsbedarfs die temporäre Zuweisung einer IP-Adresse angestoßen werden kann.

Der vorliegenden Erfindung liegt daher die Aufgabe zu Grunde, die Notwendigkeit des Aufbauens eines Kommunikationskanals über eine Schnittstelle mittels eines Kommunikationsprotokolls zu erkennen und den Aufbau des Kommunikationskanals vorzuschlagen, so dass ein schnelles Mehrfachverwenden von IP-Adressen mittels automatisierter temporärer Vergabe der IP-Adressen (Zeitmultiplexen) ermöglicht wird.

### Darstellung der Erfindung

Die Aufgabe wird erfindungsgemäß durch ein Verfahren gelöst, wie es im unabhängigen Anspruch 1 definiert ist sowie durch ein Computerprogramm, wie es im unabhängigen Anspruch 8 definiert ist. Vorteilhafte Ausführungsvarianten der Erfindung ergeben sich aus den abhängigen Ansprüchen.

Das Wesen der Erfindung besteht im Folgenden: Ein Verfahren zum Erkennen eines Bedarfs und zum Aufbauen eines Kommunikationskanals über eine Schnittstelle eines Computersystems mittels eines Kommunikationsprotokolls für eine Kommunikation des Computersystems über ein Computernetz, wobei Kommunikationsaufgaben im Computersystem in mehrere hierarchisch geordnete Schichten unterteilbar sind, die eine Netzwerkschicht aufweisen, umfasst: Erkennen eines Kommunikationsbedarfs des Computersystems; temporäres Beziehen einer Kommunikationsressource des Kommunikationsprotokolls bei erkanntem Kommunikationsbedarf des Computersystems; und Zuweisen der Kommunikationsressource an die Schnittstelle des Computersystems. Bei dem erfindungsgemäßen Verfahren wird weiter mindestens ein Auslösereignis einer der Netzwerkschicht übergeordneten Schicht der Kommunikationsaufgaben des Computersystems als für das Aufbauen des Kommunikationskanals relevant vordefiniert, wobei das Erkennen des Kommunikationsbedarfs des Computersystems ein Überwachen der der Netzwerkschicht übergeordneten Schicht der Kommunikationsaufgaben des Computersystems auf ein Auftreten des mindestens einen Auslösereignisses umfasst.

Unter Kommunikationskanal wird in diesem Zusammenhang der Übertragungsweg der Kommunikation des Computersystems verstanden. Schnittstelle bezieht sich in diesem Zusammenhang auf den Teil des Computersystems, der der Kommunikation dient. Unter Schnittstellen werden üblicherweise Hardwareschnittstellen, Benutzerschnittstellen und insbesondere Softwareschnittstellen beziehungsweise Logikschnittstellen verstanden. Eine Softwareschnittstelle kann definieren, wie Funktionen beziehungsweise Kommandos und Daten zwischen verschiedenen Prozessen und Komponenten des Computersystems ausgetauscht werden. Softwareschnittstellen können zum Zugriff auf Systemroutinen, zur Kommunikation mit anderen Prozessen beziehungsweise Programmen und zum Verbinden einzelner Softwarekomponenten (Module) eines Programms beziehungsweise als programmübergreifende Schnittstellen dienen. Insbesondere können solche Schnittstellen beziehungsweise Softwareschnittstellen über ein Kommunikationsprotokoll beziehungsweise Netzwerkprotokoll betrieben sein und können als Zwischenkommunikationsschnittstelle (IPC-Schnittstelle) auch einem solchen Kommunikationsprotokoll beziehungsweise Netzwerkprotokoll entsprechen.

Das Computersystem kann ein Endsystem sein wie beispielsweise ein oder mehrere Clientcomputer oder ein Zwischensystem (Intermediate System), das zwischen mehreren Endsystemen angeordnet ist, wie beispielsweise ein Router, eine Bridge, ein Switch, ein Domänennamensystem-Server (DNS-Server), ein Webserver oder dergleichen. Die mehreren Schichten der Kommunikationsaufgaben des Computersystems können sich insbesondere auf die Schichten des Offenensystemverbindung-Referenzmodells (OSI-Referenzmodells) der Internationalen Organisation für Normung (ISO) oder auf die Schichten des Übertragungssteuerungsprotokoll/Internetprotokoll-Referenzmodells (TCP/IP-Referenzmodell) beziehen. Beim OSI-Referenzmodell werden typischerweise eine Anwendungsschicht, eine Darstellungsschicht, eine Sitzungsschicht, eine Transportschicht, die Netzwerkschicht beziehungsweise eine Vermittlungsschicht, eine Sicherungsschicht und eine Bitübertragungsschicht in absteigender hierarchischer Ordnung unterschieden, die von sieben bis eins durchnummeriert sind. Die der Netzwerkschicht übergeordnete Schicht kann beim OSI-Referenzmodell also die Anwendungsschicht, die Darstellungsschicht, die Sitzungsschicht oder die Transportschicht sein. Beim TCP/IP-Referenzmodell werden typischerweise eine Anwendungsschicht, eine Transportschicht, die Netzwerkschicht beziehungsweise eine Internetschicht und eine Netzzugangsschicht in absteigender hierarchischer Ordnung unterschieden. Die der Netzwerkschicht übergeordnete Schicht kann beim TCP/IP-Referenzmodell also die Anwendungsschicht oder die Transportschicht sein.

Das Kommunikationsprotokoll kann in diesem Zusammenhang ein Internetprotokoll wie ein Internetprotokoll Version 6 (IPv6) und insbesondere ein Internetprotokoll Version 4 (IPv4) sein. Entsprechend kann sich die Kommunikationsressource in diesem Zusammenhang auf eine eindeutige Adresse wie beispielsweise eine Internetprotokoll-Adresse (IP-Adresse) beziehen und insbesondere auf eine Internetprotokoll Version 4-Adresse (IPv4-Adresse) oder eine Internetprotokoll Version 6-Adresse (IPv6-Adresse). Die Internetprotokolle in einer Version 4 (IPv4) sind unter der Bezeichnung RFC 791 und in einer Version 6 (IPv6) unter der Bezeichnung RFC 2460 durch eine Gruppe (RFC-Editoren) der Internet Engineering Task Force (IETF) spezifiziert und veröffentlicht worden. Durch allgemeine Akzeptanz und Gebrauch haben sich das IPv4 und das IPv6 zu Standards entwickelt, auf denen das Internet aufbaut, wobei heutzutage vorrangig noch das IPv4 implementiert ist. Kommunikationsbedarf bezieht sich in diesem Zusammenhang auf die Notwendigkeit beziehungsweise das Bedürfnis einer Kommunikation des Computersystems via des Kommunikationskanals über die Schnittstelle.

Mit dem erfindungsgemäßen Verfahren kann ein Überwachungssystem beziehungsweise ein Monitoringsystems geschaffen werden, das einen Kommunikationsbedarf - insbesondere IP-Kommunikationsbedarf - auf dem Kommunikationskanal frühzeitig erkennt und entsprechend frühzeitig Mechanismen zum Bezug und Zuweisen der Kommunikationsressource und insbesondere von IPv4-Adressparametern triggert. Dabei kann beispielsweise auf Anwendungsschicht die ein- und ausgehende IP-Kommunikation eines anderen, bereits existierenden, Kommunikationskanals überwacht und analysiert werden. Das Verfahren ermöglicht also ein frühzeitiges Erkennen des Kommunikationsbedarfs und ein frühzeitiges Beziehen und Zuweisen der Kommunikationsressource zu der Schnittstelle, so dass das Aufbauen des Kommunikationskanals verhältnismäßig schnell erfolgen kann und verhältnismäßig wenig Performance durch das Zeitmultiplexen der Kommunikationsressource im Vergleich zur festen Zuweisung der Kommunikationsressource an die Schnittestelle eingebüsst wird.

Das erfindungsgemäße Verfahren kann zur Vorhersage der benötigten Kommunikationsressourcen einer untergeordneten OSI-Schicht aufgrund der Analyse von Daten der darüberliegenden Schicht dienen. Es kann damit die Vorhersage des kurzfristigen Ressourcenbedarfes, wie beispielsweise Bandbreite, Kommunikationskanal oder Adressparameter, aus Daten der übergeordneten Schicht wie beispielsweise der Anwendungsschicht mittels Überwachen des Auslösereignisses beispielsweise durch eine Kommunikationsbedarfsensor beziehungsweise einen Ressourcenbedarfsensors erfolgen. In diesem Sinne kann das mittelbare Erkennen des Kommunikationsbedarfs auf Basis der Analyse von Anwendungsdaten gegenüber dem unmittelbaren Erkennen des IP Kommunikationsbedarfs durch Anforderung zur Weiterleitung eines IP Paketes eine Verbesserung darstellen. Und obwohl die Überwachung des Auslösereignisses beispielsweise mittels Analyse von Anwendungsdaten prinzipiell die Anforderungen und die Komplexität bezüglich des Erkennens eines Kommunikationsbedarfs erhöhen kann, können sich durch das frühzeitige Erkennen des Kommunikationsbedarfs und das anschließende Anfordern von Kommunikationsressourcen wie beispielsweise von IP-Kommunikationsparametern die Anforderungen bezüglich der Zeitdauer zum Bezug von IPv4-Kommunikationsparameter reduzieren. Durch ein dezentrales Erkennen des Kommunikationsbedarfs selbst und der Involvierung zentraler Komponenten beim Bezug der Kommunikationsparameter können die zentralen Komponenten entlastet werden.

Insbesondere kann das Verfahren beziehungsweise das Monitoringsystem für das Erkennen der Notwendigkeit eines Aufbaus und den Aufbau einer IPv4-Kommunikation auf einem Intermediate System oder auf einem Endsystem betrieben werden. Beim Betrieb auf einem Intermediate System wird die ein- und ausgehende Kommunikation vorzugsweise auf der Anwendungsschicht eines bereits existierenden Kommunikationskanals nach Daten beziehungsweise Parametern untersucht, um einen potentiellen IPv4-Kommunikationsbedarf auf einem oder mehreren zusätzlichen/weiteren Kommunikationskanälen zu erkennen. Beim Betrieb auf einem Endsystem werden vorzugsweise Funktionsaufrufe der Anwendungsschicht und Rücklieferungen an diese untersucht, um einen potentiellen IPv4-Kommunikationsbedarf zu erkennen (Zwischenlayer). In beiden Fällen können nach Erkennung des IPv4-Kommunikationsbedarfs Mechanismen zum Bezug der für eine IPv4-Kommunikation erforderlichen Parameter beziehungsweise Kommunikationsressourcen angestoßen werden. Ergibt sich nach Bezug der für eine Kommunikation via IPv4 erforderlichen Parameter keine tatsächliche Kommunikation im IPv4-Kommunikationskanal, können die zugewiesenen Parameter wieder freigegeben werden.

Vorzugsweise ist die der Netzwerkschicht übergeordnete Schicht der Kommunikationsaufgaben des Computersystems eine Anwendungsschicht der Kommunikationsaufgaben des Computersystems. Insbesondere wenn die Kommunikationsaufgaben des Computersystems nach dem OSI-Referenzmodell oder nach dem TCP/IP-Referenzmodell unterteilbar beziehungsweise unterteilt sind, kann der Kommunikationsbedarf auf diese Weise bevorzugt frühzeitig erkannt werden, so dass ein verhältnismäßig schneller Aufbau des Kommunikationskanals möglich ist. Dabei umfasst das Überwachen der Anwendungsschicht der Kommunikationsaufgaben des Computersystems auf das Auftreten des mindestens einen Auslösereignisses mit Vorteil ein Untersuchen von Anwendungsdaten. Ein solches Überwachen ermöglicht ein verhältnismäßig einfaches und effizientes frühzeitiges Erkennen des Kommunikationsbedarfs. Dabei werden die Anwendungsdaten vorzugsweise auf unmittelbar auf das Kommunikationsprotokoll bezogene Daten untersucht werden. Unmittelbar auf das Kommunikationsprotokoll bezogene Daten können in diesem Zusammenhang insbesondere unmittelbar auf IPv4 bezogene Daten sein, wie beispielsweise eine Übertragung von IPv4-Adressen, IPv4-Datenpakete auf einem bestimmten Kommunikationskanal oder Ähnlichem. Alternativ oder in Ergänzung dazu werden die Anwendungsdaten dabei vorzugsweise auf mittelbar auf das Kommunikationsprotokoll bezogene Daten untersucht. Mittelbar auf das Kommunikationsprotokoll bezogene Daten können in diesem Zusammenhang insbesondere mittelbar auf IPv4 bezogene Daten sein, wie beispielsweise DNS-Abfragen nach A Resource Record - IPv4-Adressen, Verweise auf weitere einheitliche Bezeichner für Ressourcen (URI) oder dergleichen.

Mit Vorteil umfasst das mindestens eine Auslösereignis ein Eintreffen eines Datenpakets via eines weiteren Kommunikationskanals über eine weitere Schnittstelle des Computersystems mittels eines weiteren Kommunikationsprotokolls, wobei der weiteren Schnittstelle eine weitere Kommunikationsressource zugewiesen ist. Dies ermöglicht, dass über ein Überwachen des weiteren Kommunikationskanals ein potentieller Kommunikationsbedarf über den Kommunikationskanal erkannt werden kann beziehungsweise dass eine Wahrscheinlichkeit eines Auftretens des Kommunikationsbedarfs über den Kommunikationskanal ermittelt werden kann. Auf diese Weise kann der Kommunikationsbedarf beispielsweise in einem Intermediate System frühzeitig erkannt werden. Dabei sind das Kommunikationsprotokoll und das weitere Kommunikationsprotokoll vorzugsweise unterschiedlich. Insbesondere kann das Kommunikationsprotokoll ein IPv4-Protokoll sein und das weitere Kommunikationsprotokoll ein IPv6-Protokoll, wobei in diesem Fall die Kommunikationsressource eine IPv4-Adresse und die weitere Kommunikationsressource eine IPv6-Adresse sein kann.

Ein weiterer Aspekt der Erfindung betrifft ein Computerprogramm, das dazu ausgestaltet ist, auf einem Computersystem ausgeführt zu werden und eine Aufbaueinheit zum Aufbauen eines Kommunikationskanals über eine Schnittstelle des Computersystems mittels eines Kommunikationsprotokolls für eine Kommunikation des Computersystems über ein Computernetz, wobei Kommunikationsaufgaben im Computersystem in mehrere hierarchisch geordnete Schichten unterteilbar sind, die eine Netzwerkschicht aufweisen, auf dem Computersystem einzurichten. Dabei umfasst die Aufbaueinheit eine Erkennungseinheit, mit der ein Kommunikationsbedarfs des Computersystems erkennbar ist, indem sie eine der Netzwerkschicht übergeordnete Schicht der Kommunikationsaufgaben des Computersystems auf ein Auftreten eines für das Aufbauen des Kommunikationskanals als relevant vordefinierten mindestens einen Auslösereignisses überwacht, und eine Ressourcenzuweisungseinheit, mit der eine Kommunikationsressource des Kommunikationsprotokolls bei erkanntem Kommunikationsbedarf des Computersystems beziehbar und an die Schnittstelle des Computersystems zuweisbar ist. Ein solches Computerprogramm ermöglicht ein einfaches Implementieren des oben beschriebenen erfindungsgemäßen Verfahrens mit seinen zugehörigen vorteilhaften Wirkungen.

Insbesondere ist die Erkennungseinheit vorzugsweise so ausgestaltet, dass eine Anwendungsschicht der Kommunikationsaufgaben des Computersystems auf ein Auftreten des für das Aufbauen des Kommunikationskanals als relevant vordefinierten mindestens einen Auslösereignisses überwachbar ist. Dabei ist die Erkennungseinheit vorzugsweise so ausgestaltet, dass das Überwachen der Anwendungsschicht der Kommunikationsaufgaben des Computersystems auf das Auftreten des mindestens einen Auslösereignisses ein Untersuchen von Anwendungsdaten umfasst. Weiter ist dabei die Erkennungseinheit vorzugsweise so ausgestaltet, dass die Anwendungsdaten auf unmittelbar auf das Kommunikationsprotokoll bezogene Daten untersucht werden. Ferner ist dabei die Erkennungseinheit vorzugsweise so ausgestaltet ist, dass die Anwendungsdaten auf mittelbar auf das Kommunikationsprotokoll bezogene Daten untersucht werden. Vorzugsweise ist das mindestens eine Auslösereignis ein Eintreffen eines Datenpakets via eines weiteren Kommunikationskanals über eine weitere Schnittstelle des Computersystems mittels eines weiteren Kommunikationsprotokolls umfasst, wobei der weiteren Schnittstelle eine weitere Kommunikationsressource zugewiesen ist. Vorzugsweise sind dabei das Kommunikationsprotokoll und das weitere Kommunikationsprotokoll unterschiedlich. All diese bevorzugten Ausgestaltungen des Computerprogramms ermöglichen eine einfache Implementierung des oben beschriebenen Verfahrens in dessen bevorzugten Ausführungen. Die Effekte und Wirkungen der bevorzugten Ausführungen des Computerprogramms sind entsprechend analog zu den der oben beschriebenen bevorzugten Ausführungen des Verfahrens.

### Kurze Beschreibung der Zeichnungen

Im Folgenden werden das erfindungsgemäße Verfahren und das erfindungsgemäße Computerprogramm unter Bezugnahme auf die beigefügten Zeichnungen anhand von Ausführungsbeispielen detaillierter beschrieben. Es zeigen:
- Fig. 1: eine schematische Ansicht des Aufbauens eines Kommunikationskanals über eine Schnittstelle eines Computersystems mittels eines Kommunikationsprotokolls aus dem Stand der Technik;
- Fig. 2: eine schematische Ansicht der Architektur eines Kommunikationsgateways zur Ausführung der Erfindung;
- Fig. 3: eine schematische Ansicht des Aufbauens eines Kommunikationskanals mittels des Kommunikationsgateways von Fig. 2 in einer ersten erfindungsgemäßen Anwendungsform; und
- Fig.4: eine schematische Ansicht des Aufbauens eines Kommunikationskanals mittels des Kommunikationsgateways von Fig. 2 in einer zweiten erfindungsgemäßen Anwendungsform.

### Weg(e) zur Ausführung der Erfindung

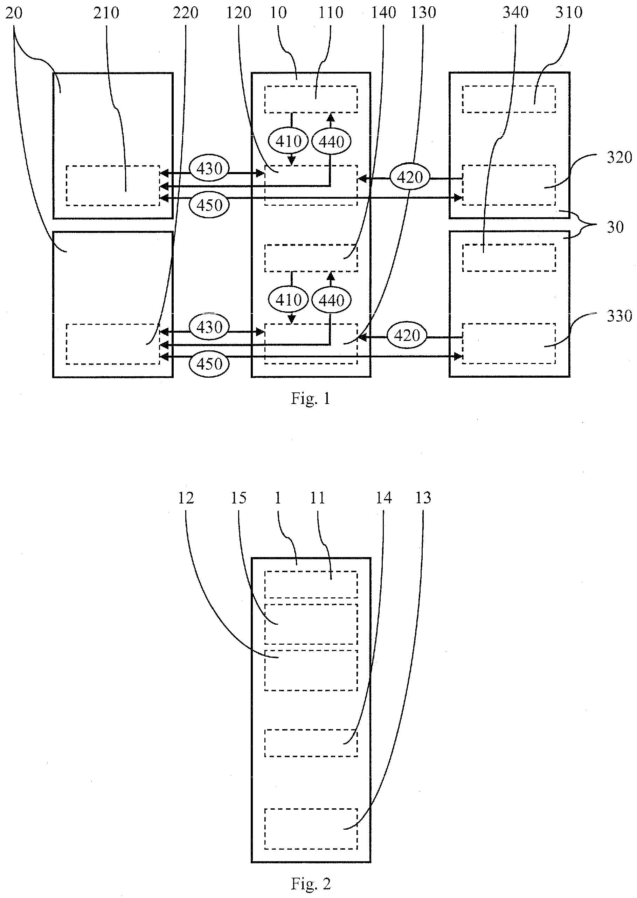

Zur Illustration der Erfindung im Vergleich mit dem Stand der Technik zeigt Fig. 1 ein bekanntes Aufbauen eines Kommunikationskanals über eine Schnittstelle eines Computersystems mittels eines Kommunikationsprotokolls. Mehrere Kommunikationsserver 20 sind über deren Schnittstellen mittels eines Kommunikationsgateways 10 mit mehreren Kommunikationsclients 30 über deren Schnittstellen verbunden. Dazu sind in einem ersten Kommunikationsserver 20 ein erster Kommunikationskanal 210 auf dessen Schnittstelle implementiert und in den weiteren Kommunikationsservern 20 weitere Kommunikationskanäle 220 auf deren Schnittstellen sowie im Kommunikationsgateway 10 eine erster Kommunikationskanal 120 und weitere Kommunikationskanäle 130 auf dessen Schnittstellen sowie in einem ersten Kommunikationsclient 30 ein erster Kommunikationskanal 320 auf dessen Schnittstelle und in den weiteren Kommunikationsclients 30 weitere Kommunikationskanäle 330 auf deren Schnittstellen. Im Kommunikationsgateway 10 sind zugehörig zu dem ersten Kommunikationskanal 120 eine Anwendung 110 implementiert und zugehörig zu den weiteren Kommunikationskanälen 130 weitere Anwendungen 140. Im ersten Kommunikationsclient 30 ist eine erste Anwendung 310 implementiert und in den weiteren Kommunikationsclients 30 weitere Anwendungen 340.

Bei dem in Fig. 1 dargestellten System sind also prinzipiell ohne Einschränkung der Allgemeinheit beziehungsweise anderer potentieller Kommunikationsteilnehmer an einer Kommunikation insbesondere an einer IP-Kommunikation ein oder mehrere Kommunikationsclients 30, Kommunikationsgateway(s) 10 und Kommunikationsserver 20 beteiligt. Der Kommunikationsgateway 10 kann gleichzeitig als Kommunikationsserver 20 und/oder Kommunikationsclient 30 abstrahiert werden. Alle Computersysteme in Fig. 1 sind durch mehrere voneinander unabhängige Kommunikationskanäle 120, 130, 210, 220, 320, 330 miteinander verbinden.

Die Notwendigkeit zum Aufbau eines zusätzlichen IP-Kommunikationskanals also der Kommunikationsbedarf wird jeweils durch einen Funktionsaufruf 410 oder ein Eintreffen eines Datenpaketes 420 erkannt. Danach erfolgt der Aufbau 430 des zugehörigen ersten (IP-)Kommunikationskanals 120, 210, 320 oder zugehöriger weiterer Kommunikationskanäle 130, 220, 330. Nach Aufbau des ersten (IP-)Kommunikationskanals 120, 210, 320 beziehungsweise der weiterer Kommunikationskanäle 130, 220, 330 kann über diesen beziehungsweise über diese kommuniziert 440, 450 werden.

Somit erfolgt im Stand der Technik derzeit die Erkennung des Kommunikationsbedarfs und insbesondere eines Internetkommunikationsbedarfs auf einer Schnittstelle beziehungsweise mindestens einem der weiteren Kommunikationskanäle 130, 220, 330 in einem Intermediate System, also einem System zwischen zwei oder mehreren Endgeräten, beim Eintreffen bzw. der Verarbeitung eines Datenpaketes auf einer anderen oder der gleichen Schnittstelle. Bei einem Endsystem würde der Kommunikationsbedarf bekanntermaßen auf einer Schnittstelle anhand des entsprechenden Funktionsaufrufs erkannt.

In der Fig. 2 ist ein Kommunikationsgateway 1 beziehungsweise Konnektivitätsgateway zur Durchführung des erfindungsgemäßen Verfahrens mit einem erfindungsgemäßen Computerprogramm gezeigt, der einen ersten Kommunikationskanal 12 und eine zugehörige erste Anwendung 11 umfasst sowie weitere Kommunikationskanäle 13 und zugehörige weitere Anwendungen 14. Zur Analyse der Anwendungsdaten der ersten Anwendung 11 bezüglich des ersten Kommunikationskanals 12 weist der Kommunikationsgateway 1 einen Kommunikationsbedarfssensor 15 auf. Wenn der Kommunikationsbedarfsensor 15 einen Kommunikationsbedarf erkennt, so wird der Aufbau zumindest eines der weiteren Kommunikationskanäle 13 angesteuert.

Der Kommunikationsgateway 1 beziehungsweise dessen Funktion kann sowohl in einem Intermediate System, das Kommunikationsdaten weiterleitet, als auch in einem Endsystem, das einen Funktionsaufrufes in eine Datenkommunikation zu anderen Systemen und Rückmeldung des Ergebnisses an die aufrufende Funktion umwandelt, implementiert sein. Das Monitoringsystem beziehungsweise der Kommunikationsgateway 1 mit seinem Kommunikationsbedarfsensor 15 analysiert also standardisierte und nicht standardisierte Anwendungsprotokolle, Funktionsaufrufe und Rückmeldungen an die Anwendungsschicht. Hierbei werden die Anwendungsdaten auf unmittelbare kommunikationsbezogene und insbesondere IPv4-bezogene (z.B. Übertragung von IPv4-Adressen, IPv4-Pakete auf einem bestimmten Kommunikationskanal) oder mittelbare kommunikationsbezogene und insbesondere IPv4-bezogene Daten (z.B. DNS Abfrage nach A Resource Record - IPv4 Adresse, Verweise auf weitere URIs, die auf IPv4 Adressen aufgelöst werden könnten) untersucht.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren verwiesen.

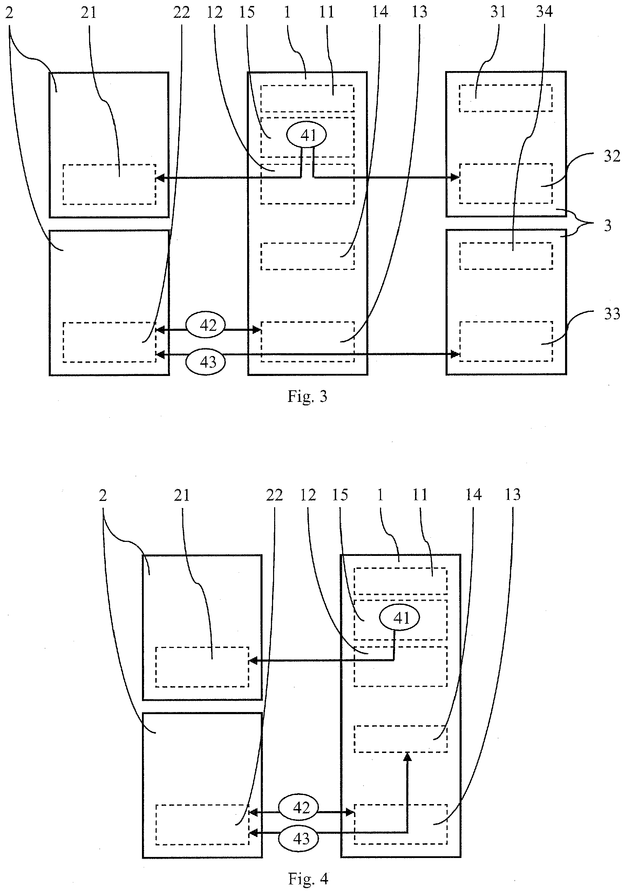

Fig. 3 zeigt den Kommunikationsgateway 1 in einem Intermediate System implementiert. Mehrere Kommunikationsserver 2 sind über deren Schnittstellen mittels des Kommunikationsgateways 1 mit mehreren Kommunikationsclients 3 über deren Schnittstellen verbunden. Dazu sind in einem ersten Kommunikationsserver 2 ein erster Kommunikationskanal 21 auf dessen Schnittstelle implementiert und in den weiteren Kommunikationsservern 2 weitere Kommunikationskanäle 22 auf deren Schnittstellen sowie in einem ersten Kommunikationsclient 3 ein erster Kommunikationskanal 32 auf dessen Schnittstelle und in den weiteren Kommunikationsclients 3 weitere Kommunikationskanäle 33 auf deren Schnittstellen. Im ersten Kommunikationsclient 3 ist eine erste Anwendung 31 implementiert und in den weiteren Kommunikationsclients 3 weitere Anwendungen 34.

Wenn der Kommunikationsgateway 1 beziehungsweise der Konnektivitätsgateway in einem oder als ein Intermediate System implementiert ist, werden wie durch die Pfeile 41 in Fig. 3 angedeutet die Anwendungsdaten des existierenden ersten Kommunikationskanals 12, 21, 32 beziehungsweise der zugehörigen ersten Anwendung 11 von dem Kommunikationsbedarfssensor 15 überwacht beziehungsweise analysiert. Dabei kann der erste Kommunikationskanal 12, 21, 32 insbesondere ein IPv6-Kommunikationskanal sein. Wird bei dieser Überwachung ein möglicher weiterer Kommunikationsbedarf und insbesondere ein IPv4-Kommunikationsbedarf erkannt, so erfolgt wie durch den Pfeil 42 in Fig. 3 angedeutet der Aufbau mindestens eines der weiteren Kommunikationskanäle 13, 22, 33, der insbesondere ein IPv4-Kommunikationskanal sein kann.

Zur Erkennung des Kommunikationsbedarfs sind Auslösereignisse der ersten Anwendung 11 vordefiniert, die über die Auswertung der Anwendungsdaten erkennbar sind, wie beispielsweise eine Abfrage/Antwort von einer IPv4-Adresse (A Resource Record) via eines Domain Name System (DNS), andere Uniform Resource Identities (URI) oder Ähnliches. Der Aufbau des mindestens einen der weiteren Kommunikationskanäle 13, 22, 33 umfasst ein Beziehen einer Kommunikationsressource und insbesondere einer temporären IPv4-Adresse und ein Zuweisen der Kommunikationsressource beziehungsweise der IPv4-Adresse an die zugehörigen Schnittstelle. Nach diesem Aufbau kann dann eine Kommunikation und insbesondere eine IPv4-Kommunikation über diesen mindestens einen der weiteren Kommunikationskanäle 13, 22, 33 erfolgen.

Die Kommunikation insbesondere eine IP-Kommunikation im ersten Kommunikationskanal 12, 21, 32 wird also im Kommunikationsgateway 1 durch den Kommunikationsbedarfssensor 15 überwacht. Der Kommunikationsbedarfsensor 15 erkennt dabei durch Überwachung und Analyse der Anwendungsdaten, ob zukünftig ein zusätzlicher Kommunikationsbedarf und insbesondere ein IPv4-Kommunikationsbedarf entstehen könnte, der den Aufbau mindestens eines der weiteren Kommunikationskanäle 13, 22, 33 erfordert. Entsprechend wird durch die Funktion der Aufbau eines weiteren Kommunikationskanals angesteuert.

In Fig. 4 ist der Kommunikationsgateway 1 beziehungsweise Konnektivitätsgateway in einem Endsystem implementiert gezeigt. Wenn im Kommunikationsgateway 1 Anwendungen 11, 14 implementiert sind, welche die verschiedene Kommunikationskanäle 12, 13 nutzen, wird wie mit Pfeil 41 in Fig. 4 angedeutet der Datenaustausch zwischen der ersten Anwendung 11 und dem existierendem ersten Kommunikationskanal 12, 21 vom Kommunikationssensor 15 überwacht und analysiert. Dabei kann der erste Kommunikationskanal 12, 21 ein IPv6-Kommunikationskanal sein. Wird bei dieser Überwachung ein möglicher weiterer Kommunikationsbedarf und insbesondere ein IPv4-Kommunikationsbedarf erkannt, so erfolgt wie durch den Pfeil 42 in Fig. 4 angedeutet der Aufbau mindestens eines der weiteren Kommunikationskanäle 13, 22, der insbesondere ein IPv4-Kommunikationskanal sein kann.

Zur Erkennung des Kommunikationsbedarfs sind wiederum Auslösereignisse der ersten Anwendung 11 vordefiniert, die über die Auswertung des Datenaustauschs erkennbar sind, wie beispielsweise eine Abfrage/Antwort von einer IPv4-Adresse (A Resource Record) via eines Domain Name System (DNS), andere Uniform Resource Identities (URI) oder Ähnliches. Der Aufbau des mindestens einen der weiteren Kommunikationskanäle 13, 22 umfasst ein Beziehen einer Kommunikationsressource und insbesondere einer temporären IPv4-Adresse und ein Zuweisen der Kommunikationsressource beziehungsweise der IPv4-Adresse an die zugehörigen Schnittstelle. Nach diesem Aufbau kann dann eine Kommunikation und insbesondere eine IPv4-Kommunikation über diesen mindestens einen der weiteren Kommunikationskanäle 13, 22 erfolgen.

Mit Nutzung des beschriebenen erfindungsgemäßen Monitoringssystems beziehungsweise Kommunikationsgateways 1 kann frühzeitig das zukünftige Entstehen von Kommunikationsbedarfen und insbesondere IPv4-Kommunikationsbedarfen sowie die Notwendigkeit des Erstellens zusätzlicher Kommunikationskanäle 13, 22, 33 erkannt werden. Darauf aufsetzend kann die Zuteilung von Kommunikationsressourcen und insbesondere IPv4-Adressparametern für den oder die zusätzlichen weiteren Kommunikationskanäle 13, 22, 33 bereits vor dem Beginn der weiteren Kommunikation und insbesondere einer IPv4-Kommunikation angetriggert werden, womit sich die, aus dem notwendigen initialen Bezug von Kommunikationsressourcen (IPv4-Kommunikationsparametern) gemäß Stand der Technik ergebenden Verzögerungen bei der Realisierung der Kommunikation (IPv4-Kommunikation) wesentlich minimieren oder sogar beseitigen lassen können. Des Weiteren kann das durch Verzögerungen bei der Kommunikation (IPv4-Kommunikation) mögliche Potential an Störungen minimiert oder beseitigt werden. Durch den dadurch möglichen schnellen Aufbau des mindestens einen der weiteren Kommunikationskanäle 13, 22, 33 kann das Kommunikationserlebnis eines Benutzers beziehungsweise Kunden verbessert und dessen Zufriedenheit gesteigert werden.

Zusammenfassend können gegenüber dem oben beschriebenen Stand der Technik idealerweise folgende Vorteile durch die Erfindung auftreten: Der Bedarf an einem zusätzlichen IPv4-Kommunikationskanal oder zusätzlicher IPv4-Konnektivität kann vor Auftreten der tatsächlichen IPv4-Kommunikation erkannt werden. Das Anfordern von Ressourcenparametern für den zusätzlichen IPv4-Kommunikationskanal kann vor dem Auftreten des realen Kommunikationsbedarfs erfolgen. Die IPv4-Konnektivität kann vor Auftreten des tatsächlichen IPv4-Kommunikationsbedarfs hergestellt werden oder aber zeitliche Verzögerungen reduziert werden. Durch Minimierung oder Reduzierung der Verzögerungen verbessern sich das Kundenerlebnis und die Kundenzufriedenheit. Die Zeit zum Aufbau der IPv4 Konnektivität muss nicht minimiert werden, da für den Aufbau der Konnektivität mehr Zeit zur Verfügung steht. Die Anzahl der durch Verzögerungen bei der Herstellung der IPv4-Konnektivität auftretenden Störungen könne reduziert werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Ausführungsformen und einzelne deren Merkmale vom Erfindungsgegenstand ausgeschlossen sein.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert.

Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Insbesondere kann ein Computerprogramm beispielsweise ein auf einem computerlesbaren Medium gespeichertes Computerprogrammprodukt sein, das dazu ausgestaltet ist, ausgeführt zu werden, um ein Verfahren zu implementieren, insbesondere das erfindungsgemäße Verfahren.

Alle Bezugszeichen in den Ansprüchen sind nicht als den Umfang der Ansprüche einschränkend zu verstehen.

## Patentansprüche

1. Verfahren zum Erkennen eines Bedarfs und zum Aufbauen eines Kommunikationskanals (12, 13, 21, 22, 32, 33) über eine Schnittstelle eines Computersystems (1, 2, 3) mittels eines Kommunikationsprotokolls für eine Kommunikation des Computersystems (1, 2, 3) über ein Computernetz, wobei Kommunikationsaufgaben im Computersystem (1, 2, 3) in mehrere hierarchisch geordnete Schichten unterteilbar sind, die eine Netzwerkschicht aufweisen, umfassend:
Erkennen eines Kommunikationsbedarfs des Computersystems (1, 2, 3),
temporäres Beziehen einer Kommunikationsressource des Kommunikationsprotokolls bei erkanntem Kommunikationsbedarf des Computersystems (1, 2, 3), und
Zuweisen der Kommunikationsressource an die Schnittstelle des Computersystems (1, 2 , 3),
**dadurch gekennzeichnet, dass**
mindestens ein Auslösereignis einer der Netzwerkschicht übergeordneten Schicht der Kommunikationsaufgaben des Computersystems (1, 2, 3) als für das Aufbauen des Kommunikationskanals (12, 13, 21, 22, 32, 33) relevant vordefiniert wird, und dass das Erkennen des Kommunikationsbedarfs des Computersystems (1, 2, 3) ein Überwachen der der Netzwerkschicht übergeordneten Schicht der Kommunikationsaufgaben des Computersystems (1, 2, 3) auf ein Auftreten des mindestens einen Auslösereignisses umfasst; wobei die der Netzwerkschicht übergeordnete Schicht der Kommunikationsaufgaben des Computersystems (1, 2, 3) eine Anwendungsschicht der Kommunikationsaufgaben des Computersystems (1, 2, 3) ist, wobei das Überwachen der Anwendungsschicht der Kommunikationsaufgaben des Computersystems (1, 2, 3) auf das Auftreten des mindestens einen Auslösereignisses ein Untersuchen von Anwendungsdaten umfasst, und
wobei die Anwendungsdaten auf mittelbar auf das Kommunikationsprotokoll bezogene Daten untersucht werden.

2. Verfahren nach Anspruch 1, bei dem die Anwendungsdaten auf unmittelbar auf das Kommunikationsprotokoll bezogene Daten untersucht werden.

3. Verfahren nach einem der vorangehenden Ansprüche, wobei das mindestens eine Auslösereignis ein Eintreffen eines Datenpakets via eines weiteren Kommunikationskanals (12, 13, 21, 22, 32, 33) über eine weitere Schnittstelle des Computersystems (1, 2, 3) mittels eines weiteren Kommunikationsprotokolls umfasst, wobei der weiteren Schnittstelle eine weitere Kommunikationsressource zugewiesen ist.

4. Verfahren nach Anspruch 3, bei dem das Kommunikationsprotokoll und das weitere Kommunikationsprotokoll unterschiedlich sind.

5. Computerprogramm, das dazu ausgestaltet ist, auf einem Computersystem (1, 2, 3) ausgeführt zu werden und eine Aufbaueinheit (1) zum Aufbauen eines Kommunikationskanals (12, 13, 21, 22, 32, 33) über eine Schnittstelle des Computersystems (1, 2, 3) mittels eines Kommunikationsprotokolls für eine Kommunikation des Computersystems (1, 2, 3) über ein Computernetz, wobei Kommunikationsaufgaben im Computersystem (1, 2, 3) in mehrere hierarchisch geordnete Schichten unterteilbar sind, die eine Netzwerkschicht aufweisen, auf dem Computersystem (1, 2, 3) einzurichten, wobei die Aufbaueinheit (1) eine Erkennungseinheit (15), mit der ein Kommunikationsbedarfs des Computersystems (1, 2, 3) erkennbar ist, indem sie eine der Netzwerkschicht übergeordnete Schicht der Kommunikationsaufgaben des Computersystems (1, 2, 3) auf ein Auftreten eines für das Aufbauen des Kommunikationskanals (12, 13, 21, 22, 32, 33) als relevant vordefinierten mindestens einen Auslösereignisses überwacht, und eine Ressourcenzuweisungseinheit, mit der eine Kommunikationsressource des Kommunikationsprotokolls bei erkanntem Kommunikationsbedarf des Computersystems (1, 2, 3) beziehbar und an die Schnittstelle des Computersystems (1, 2, 3) zuweisbar ist, umfasst, wobei die Erkennungseinheit (15) so ausgestaltet ist, dass eine Anwendungsschicht der Kommunikationsaufgaben des Computersystems (1, 2, 3) auf ein Auftreten des für das Aufbauen des Kommunikationskanals (12, 13, 21, 22, 32, 33) als relevant vordefinierten mindestens einen Auslösereignisses überwachbar ist, wobei die Erkennungseinheit (15) so ausgestaltet ist, dass das Überwachen der Anwendungsschicht der Kommunikationsaufgaben des Computersystems (1, 2, 3) auf das Auftreten des mindestens einen Auslösereignisses ein Untersuchen von Anwendungsdaten umfasst, und wobei die Erkennungseinheit (15) so ausgestaltet ist, dass die Anwendungsdaten auf mittelbar auf das Kommunikationsprotokoll bezogene Daten untersucht werden.

6. Computerprogramm nach Anspruch 5, bei dem die Erkennungseinheit (15) so ausgestaltet ist, dass die Anwendungsdaten auf unmittelbar auf das Kommunikationsprotokoll bezogene Daten untersucht werden.

7. Computerprogramm nach einem der Ansprüche 5 bis 6, wobei das mindestens eine Auslösereignis ein Eintreffen eines Datenpakets via eines weiteren Kommunikationskanals (12, 13, 21, 22, 32, 33) über eine weitere Schnittstelle des Computersystems (1, 2, 3) mittels eines weiteren Kommunikationsprotokolls umfasst, wobei der weiteren Schnittstelle eine weitere Kommunikationsressource zugewiesen ist.

8. Computerprogramm nach Anspruch 7, bei dem das Kommunikationsprotokoll und das weitere Kommunikationsprotokoll unterschiedlich sind.

## Claims

1. A method for detecting a need and establishing a communication channel (12, 13, 21, 22, 32, 33) over an interface of a computer system (1, 2, 3) using a communication protocol for communication of the computer system (1, 2, 3) over a computer network, wherein communication tasks in the computer system (1, 2, 3) can be partitioned in a plurality of hierarchically arranged layers including a network layer, comprising:
detecting a need for communication of the computer system (1, 2, 3),
temporarily obtaining a communication resource of the communication protocol in case a communication need of the computer system (1, 2, 3) has been detected and
allocating the communication resource to the interface of the computer system (1, 2, 3),
**characterised in that**
at least one trigger event of a layer of the communication tasks of the computer system (1, 2, 3) superordinate to the network layer is predefined as being relevant to the setup of the communication channel (12, 13, 21, 22, 32, 33) and the detection of the communication need of the computer system (1, 2, 3) comprises a monitoring of the layer of the communication tasks of the computer system (1, 2, 3) superordinate to the network layer as regards the occurrence of the at least one trigger event, wherein the layer of the communication tasks of the computer system (1, 2, 3) superordinate to the network layer is an application layer of the communication tasks of the computer system (1, 2, 3), wherein the monitoring of the application layer of the communication tasks of the computer system (1, 2, 3) as regards the occurrence of the at least one trigger event comprises an analysis of application data, and
wherein the application data are analysed as regards data indirectly related to the communication protocol.

2. The method of claim 1, wherein the application data are analysed as regards data directly related to the communication protocol.

3. The method of any of the preceding claims, wherein the at least one trigger event comprises the receipt of a data packet via a further communication channel (12, 13, 21, 22, 32, 33) over a further interface of the computer system (1, 2, 3) by means of a further communication protocol, wherein a further communication resource is allocated to the further interface.

4. The method of claim 3, wherein the communication protocol is different from the further communication protocol.

5. A computer program configured to be executed on a computer system (1, 2, 3) and to establish on the computer system (1, 2, 3) a setup unit (1) for setting up a communication channel (12, 13, 21, 22, 32, 33) over an interface of the computer system (1, 2, 3) by means of a communication protocol for communication of the computer system (1, 2, 3) over a computer network, wherein communication tasks in the computer system (1, 2, 3) can be partitioned in a plurality of hierarchically arranged layers comprising a network layer, the setup unit (1) comprising a detection unit (15) revealing the communication need of the computer system (1, 2, 3) by monitoring a layer of the communication tasks of the computer system (1, 2, 3) superordinate to the network layer as regards the occurrence of an at least one trigger event predefined as being relevant to the setup of the communication channel (12, 13, 21, 22, 32, 33) and a resource allocation unit with which a communication resource of the communication protocol can be obtained if a communication need of the computer system (1, 2, 3) is detected and allocated to the interface of the computer system (1, 2, 3), wherein the detection unit (15) is configured such that an application layer of the communication tasks of the computer system (1, 2, 3) can be monitored as regards an occurrence of the at least one trigger event predefined as being relevant to the setup of the communication channel (12, 13, 21, 22, 32, 33), wherein the detection unit (15) is configured such that the monitoring of the application layer of the communication tasks of the computer system (1, 2, 3) as regards the occurrence of the at least one trigger event includes an analysis of the application data and wherein the detection unit (15) is configured such that application data are analysed as regards data indirectly related to the communication protocol.

6. The computer program according to claim 5, wherein the detection unit (15) is configured such that the application data are as regards data directly related to the communication protocol.

7. The computer program of any of claims 5 to 6, wherein the at least one trigger event comprises an arrival of a data packet via a further communication channel (12, 13, 21, 22, 32, 33) over a further interface of the computer system (1, 2, 3) via a further communication protocol, wherein a further communication resource is allocated to the further interface.

8. The computer program of claim 7, wherein the communication protocol is different from the further communication protocol.

## Revendications

1. Procédé servant à identifier un besoin et servant à établir un canal de communication (12, 13, 21, 22, 32, 33) par l'intermédiaire d'une interface d'un système d'ordinateur (1, 2, 3) au moyen d'un protocole de communication en vue d'une communication du système d'ordinateur (1, 2, 3) par l'intermédiaire d'un réseau d'ordinateurs, dans lequel des tâches de communication dans le système d'ordinateur (1, 2, 3) peuvent être divisées en plusieurs couches classées de manière hiérarchique, lesquelles présentent une couche de réseau, comprenant les étapes suivantes consistant à :
identifier un besoin de communication du système d'ordinateur (1, 2, 3) ;
fournir de manière temporaire une ressource de communication du protocole de communication en cas de besoin en communication identifié du système d'ordinateur (1, 2, 3) ; et
allouer la ressource de communication à l'interface du système d'ordinateur (1, 2, 3),
**caractérisé en ce**
**qu'**au moins un événement déclencheur d'une couche, supérieure à la couche de réseau, des tâches de communication du système d'ordinateur (1, 2, 3) est prédéfini comme étant important pour l'élaboration du canal de communication (12, 13, 21, 22, 32, 33), et en ce que l'identification du besoin en communication du système d'ordinateur (1, 2, 3) comprend une surveillance de la couche, supérieure à la couche de réseau, des tâches de communication du système d'ordinateur (1, 2, 3) pour ce qui est d'une survenue de l'au moins un élément déclencheur, dans lequel la couche, supérieure à la couche de réseau, des tâches de communication du système d'ordinateur (1, 2, 3) est une couche d'application des tâches de communication du système d'ordinateur (1, 2, 3), dans lequel la surveillance de la couche d'application des tâches de communication du système d'ordinateur (1, 2, 3) pour ce qui est de la survenue de l'au moins un événement déclencheur comprend une recherche de données d'application, et
dans lequel les données d'application sont surveillées pour ce qui est des données indirectement liées au protocole de communication.

2. Procédé selon la revendication 1, dans le cadre duquel les données d'application sont surveillées pour ce qui est des données directement liées au protocole de communication.

3. Procédé selon l'une quelconque des revendications précédentes, dans lequel l'au moins un événement déclencheur comprend une réception d'un paquet de données via un autre canal de communication (12, 13, 21, 22, 32, 33) par l'intermédiaire d'une autre interface du système d'ordinateur (1, 2, 3) au moyen d'un autre protocole de communication, dans lequel une autre ressource de communication est allouée à l'autre interface.

4. Procédé selon la revendication 3, dans le cadre duquel le protocole de communication et l'autre protocole de communication sont différents.

5. Programme d'ordinateur, qui est configuré pour être exécuté sur un système d'ordinateur (1, 2, 3) et pour installer sur le système d'ordinateur (1, 2, 3) une unité d'élaboration (1) servant à élaborer un canal de communication (12, 13, 21, 22, 32, 33) par l'intermédiaire d'une interface du système d'ordinateur (1, 2, 3) au moyen d'un protocole de communication en vue d'une communication du système d'ordinateur (1, 2, 3) par l'intermédiaire d'un réseau d'ordinateurs, dans lequel des tâches de communication dans le système d'ordinateur (1, 2, 3) peuvent être divisées en plusieurs couches classées de manière hiérarchique, lesquelles présentent une couche de réseau, dans lequel l'unité d'élaboration (1) comprend une unité d'identification (15), laquelle permet d'identifier un besoin en communication du système d'ordinateur (1, 2, 3) en ce qu'elle surveille une couche, supérieure à la couche de réseau, des tâches de communication du système d'ordinateur (1, 2, 3) pour ce qui est d'une survenue d'au moins un événement déclencheur prédéfini comme étant important pour l'élaboration du canal de communication (12, 13, 21, 22, 32, 33), et une unité d'allocation de ressources, qui permet de fournir une ressource de communication du protocole de communication en cas de besoin en communication identifié du système d'ordinateur (1, 2, 3) et qui peut être allouée à l'interface du système d'ordinateur (1, 2, 3), dans lequel l'unité d'identification (15) est configurée de telle sorte qu'une couche d'application des tâches de communication du système d'ordinateur (1, 2, 3) est surveillée pour ce qui est d'une survenue de l'au moins un événement déclencheur prédéfini comme étant important pour l'élaboration du canal de communication (12, 13, 21, 22, 32, 33), dans lequel l'unité d'identification (15) est configurée de telle manière que la surveillance de la couche d'application des tâches de communication du système d'ordinateur (1, 2, 3) pour ce qui est de la survenue de l'au moins un événement déclencheur comprend une recherche des données d'application, et dans lequel l'unité d'identification (15) est configurée de telle sorte que les données d'application sont surveillées pour ce qui est des données indirectement liées au protocole de communication.

6. Programme d'ordinateur selon la revendication 5, dans le cadre duquel l'unité d'identification (15) est configurée de telle sorte que les données d'application sont surveillées pour ce qui est des données directement liées au protocole de communication.

7. Programme d'ordinateur selon l'une quelconque des revendications 5 à 6, dans lequel l'au moins un événement déclencheur comprend une réception d'un paquet de données via un autre canal de communication (12, 13, 21, 22, 32, 33) par l'intermédiaire d'une autre interface du système d'ordinateur (1, 2, 3) au moyen d'un autre protocole de communication, dans lequel une autre ressource de communication est allouée à l'autre interface.

8. Programme d'ordinateur selon la revendication 7, dans le cadre duquel le protocole de communication et l'autre protocole de communication sont différents.
